# EUROPÄISCHE PATENTSCHRIFT

(11) **EP 1 322 177 B1**
(45) Veröffentlichungstag und Bekanntmachung des Hinweises auf die Patenterteilung: **08.03.2006**
(21) Anmeldenummer: 01974295.6
(22) Anmeldetag: 25.09.2001
(51) Int. Cl.: A23K 1/165

(54) **VERFAHREN UND VORRICHTUNG ZUM DOSIEREN, LÖSEN UND AUFSPRÜHEN VON ENZYMEN AUF FESTE FUTTERPRODUKTE**
METHOD AND DEVICE FOR DOSING, DISSOLVING AND SPRAYING ENZYMES ON SOLID FEED PRODUCTS
PROCEDE ET DISPOSITIF DE DOSAGE, DE DISSOLUTION ET D'ASPERSION D'ENZYMES SUR DES PRODUITS ALIMENTAIRES SOLIDES

(30) Priorität: 29.09.2000 DE 10048385
(43) Veröffentlichungstag der Anmeldung: 02.07.2003
(73) Patentinhaber: BASF Aktiengesellschaft, 67056 Ludwigshafen (DE)
(72) Erfinder: HEINZL, Wolfgang, 67157 Wachenheim (DE); BRAUN, Jörg, 76877 Offenbach (DE); BETZ, Roland, 67150 Niederkirchen (DE); COUSINS, Barton, Belvidere J 07823 (US); HARZ, Hans-Peter, 67373 Dubenhofen (DE); HEINDL, Ulrich, Lantau Island Hong Kong (CN)
(74) Vertreter: Isenbruck, Günter
(86) Internationale Anmeldenummer: PCT/EP2001/011077
(87) Internationale Veröffentlichungsnummer: WO 2002/026049

(56) Entgegenhaltungen:
- US-A- 4 340 308
- US-A- 6 056 822

## Beschreibung

Die Erfindung betrifft ein Verfahren und eine Vorrichtung zum Dosieren, Lösen und Aufsprühen von Enzymen auf feste Futterprodukte.

Tiere bekommen ihr Futter überwiegend entweder in pulvriger Form (Mehl) oder in Würfelform (Pellets) verabreicht. Heutzutage beinhaltet Tierfutter in der Regel auch Enzyme als Futterbestandteil. Im Falle von pulverförmigem Futter werden Enzyme ebenfalls in dieser Form zugesetzt. Manche Tierarten, zum Beispiel Schweine, bevorzugen hingegen ihr Futter in pelletierter Form. Enzyme in Pulverform haften aber nicht auf pelletiertem Futter, zudem erfährt das Futter während des Pelletierungsprozesses Temperaturen im Bereich von ungefähr 80 °C und darüber, wodurch unter anderem Salmonellen und Ecoli-Bakterien unschädlich gemacht werden. Eventuell zugesetzte Enzyme würden bei diesen Temperaturen ebenfalls zerstört oder mindestens in ihrer Wirkungsweise stark beeinträchtigt werden. Aus diesem Grund werden die Enzyme erst im Anschluss an den Pelletierungsprozess nach dem Abkühlen des Mischfutters aufgetragen. Dieser Prozess ist als "Post Pelleting Application" (PPA) schon seit längerem bekannt, wobei die Enzyme in flüssiger Form auf die Futterprodukte aufgebracht werden müssen, um eine bessere Verteilung über sowie Haftung an den Futterwürfeln zu erreichen.

In der Futtermittelindustrie ist es gängige Praxis, dass die verwendeten Enzyme bereits in gelöster Form als Konzentrat angeliefert und vor Ort auf die gewünschte Konzentration verdünnt werden. Anschließend werden die gelösten Enzyme über eine spezielle Vorrichtung auf die pelletierten Futterprodukte aufgesprüht. Ebenfalls möglich ist das aufwendige Verfahren des manuellen Lösens und Verdünnens der pulverförmigen Enzyme auf die gewünschte Endkonzentration. Deswegen ist es von Interesse, Vorrichtungen zu entwickeln, die das Dosieren, Lösen und Aufsprühen von pulverförmigen Enzymen auf feste Futterprodukte in einem Arbeitsschritt ermöglichen. Dies hat auch zum Vorteil, dass geringere Transportkosten anfallen, da das Transportvolumen von gängigen pulverförmigen Enzymen im Regelfall um den Faktor 5 kleiner ist als die Volumina der entsprechenden Enzymkonzentratlösungen, die derzeit in der PPA Verwendung finden. Außerdem muss bei diesem Verfahren die Haltbarkeitsproblematik von wässrigen Enzymkonzentratlösungen während des Transportes sowie die Lagerung über einen längeren Zeitraum nicht mehr berücksichtigt werden. Dies ist insbesondere von Vorteil, wenn die PPA in (sehr) warmen Gegenden durchgeführt werden soll.

US 6,056,822 beschreibt unter anderem auch eine rechnergestützte Vorrichtung, bei der pulverförmige Enzyme aus einem Vorratsgefäß in ein Mischgefäß überführt werden, um dort unter Zugabe einer Flüssigkeit mit Hilfe eines Rührers gelöst und dosiert zu werden. Anschließend wird die Enzymlösung auf zwei Tanks verteilt, um abwechselnd von dort aus über eine Sprühvorrichtung auf pelletierte Futterprodukte aufgebracht zu werden. Dieser Vorrichtung haften aber mehrere Nachteile an. Das Lösen der Enzyme erfolgt unter Zuhilfenahme eines Rührers, Flüssigkeit kann nur aus einem einzelnen Behältnis in das Mischgefäß eingeleitet werden, außerdem sind zwei Behältnisse zur Zwischenlagerung der fertigen Enzymlösung notwendig.

Die der erfindungsgemäßen Verfahren zugrunde liegende Aufgabe besteht darin, die dem Stand der Technik anhaftenden offensichtlichen Mängel zu beseitigen, in dem das zeit- und kostengünstige Verfahren sowie die dazugehörige Vorrichtung zum Dosieren, Lösen und Aufbringen von pulverförmigen Enzymen auf feste Futterprodukte weiter optimiert wird.

Erfindungsgemäß wird diese Aufgabe durch ein Verfahren sowie die dem Verfahren zugrunde liegende Vorrichtung gelöst, die folgende Merkmale enthalten:
a) Über eine Leitung und eine Öffnung wird eine Flüssigkeit in ein Mischgefäß überführt,
b) daraufhin werden Enzyme in Pulverform aus einem Dosiertrichter in das Mischgefäß überführt und in der zuvor zugegebenen Flüssigkeit gelöst,
c) eine zweite Flüssigkeit wird aus einem weiteren Vorratsgefäß mit einer Pumpe in das Mischgefäß gepumpt, wobei die Flüssigkeiten separat oder zusammen unter Verwendung einer Öffnung in das Mischgefäß eingeleitet werden,
d)der Inhalt des Mischgefaßes wird zur Lösungshomogenisierung mittels einer Pumpe in frei bestimmbaren Zeitintervallen durch einen Kreislauf gepumpt, der im Wesentlichen
   (d1) ein Mischgefäß,
   (d2) eine Pumpe,
   (d3) ein Ventil,
   (d4) eine sich im Inneren des Mischgefäßes befindliche Eintragsvorrichtung, auf welcher eine oder mehrere Öffnungen angebracht sind,
   (d5) und eine Leitung, die an verschiedenen Stellen an das Mischgefäß angeschlossen werden kann, wobei das eine Ende der Leitung mit dem Gefäßboden des Mischgefäßes und das andere Ende mit der Eintragsvorrichtung verbunden ist,
   enthält, worauf
e) der Inhalt des Mischgefäßes in ein Dosiergefäß überführt wird, woraus
f) der Inhalt des Dosiergefäßes in eine oder mehrere parallel angeordnete Dosiereinheiten weitergeleitet wird, um von dort abschließend auf die festen Futterprodukte aufgebracht zu werden.

Die Vorteile der erfindungsgemäßen Lösung liegen insbesondere darin, dass zum einem durch das Vorhandensein von mehreren, in ihrer Positionierung variablen Öffnungen und, welche insbesondere Düsen sind, im Mischgefäß auf einen Rührer sowie den dazugehörige Stellantrieb verzichtet werden kann, was eine deutliche Raum- und Kostenersparnis bewirkt. Außerdem kann die jeweilige Konzentration der Enzymlösungen präziser eingestellt werden, da eventuelle Feststoffablagerungen an der Gehäuseinnenwand des Mischgefäßes mit dieser variabel positionierbaren Sprühtechnik viel effektiver der Enzymlösung wieder zugefügt werden können als mit einem Rührer, dies gilt insbesondere, wenn sich geringere Mengen an Flüssigkeit im Mischgefäß befinden und sich durch die Rührwirkung nur noch ein kleiner Teil der Gehäuseinnenwand mit Flüssigkeit bedecken lässt.

Ein weiterer Vorteil der erfindungsgemäßen Lösung liegt darin, dass die Möglichkeit besteht, mindestens 2 Flüssigkeiten unabhängig voneinander zur Lösung der pulverförmigen Enzyme hinzuzugeben. Dadurch können gegebenenfalls auch unterschiedliche Konzentrationen der zweiten sowie jeder weiteren Flüssigkeit im Mischgefäß eingestellt werden.

Ein weiterer Vorteil der erfindungsgemäßen Lösung liegt darin, dass nur ein Behältnis zur Zwischenlagerung der fertigen Enzymlösung notwendig ist. Vorrichtungen gemäß dem Stand der Technik erfordern jedoch 2 solcher Behältnisse, die zudem ein aufwendiges System aus Ventilen, Pumpen, Zirkulations- und Rückleitungen erfordern. Mit der erfindungsgemäßen Vorrichtung lassen sich hingegen bedeutlich Kosten und Platz bei der Herstellung der Vorrichtung einsparen und auch die Bedienung, Überwachung und Wartung der Vorrichtung vereinfacht sich erheblich.

Ein zusätzlicher Vorteil der erfindungsgemäßen Lösung liegt in der parallelen Anordnung von mehreren Dosiereinheiten zum Aufbringen der Enzymlösung auf feste Futterprodukte. Dadurch lassen sich mehrere Chargen an festen Futterprodukten gleichzeitig und mit unterschiedlicher Dosierung bedienen.

Anhand einer Zeichnung wird die Erfindung näher erläutert.

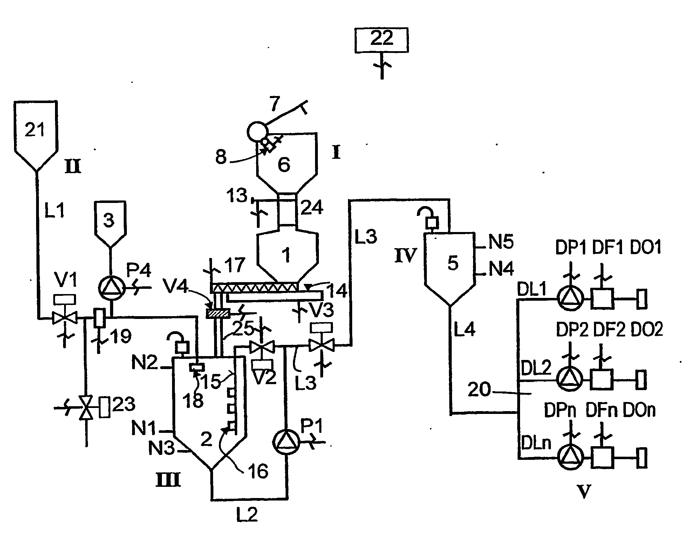

Aus Figur 1 geht hervor, dass die erfindungsgemäße Vorrichtung zum Dosieren, Lösen und Aufbringen von pulverförmigen Enzymen auf feste Futterprodukte folgende Hauptkomponenten umfasst: eine Dosiereinheit für pulverförmige Enzyme I, einer Flüssigkeitsreservoireinheit II, eine Mischeinheit III, eine Dosiereinheit der enzymhaltigen Flüssigkeit IV sowie eine Aufbringvorrichtung V. Die einzelnen Hauptkomponenten sind durch diverse Verbindungseinheiten miteinander verknüpft sowie an eine Recheneinheit 22 angeschlossen, welche sowohl den Betrieb der einzelnen Hauptkomponenten als auch deren Zusammenspiel steuert.

Die Dosiereinheit für pulverförmige Enzyme I enthält einen Dosiertrichter 1 auf dem ein Vorratstrichter 6 aufgebracht ist. Zwischen dem Vorratstrichter 6 und dem Dosiertrichter 1 befindet sich ein beispielsweise pneumatisches Ventil 13 sowie ein Verbindungsstück 24, welches in einer bevorzugten Ausführung der erfindungsgemäßen Vorrichtung ganz oder in bestimmten Bereichen flexibel beschaffen ist. Auf dem Vorratstrichter 6 ist ein Deckel 7 aufgebracht. In einer bevorzugten Ausfertigung der erfindungsgemäßen Vorrichtung ist der Deckel 7 ein Dreh- oder Kippdeckel mit einem Schloss 12, welches elektromagnetisch betätigt sein kann, wobei bei geschlossenem Deckel 7 der Nocken 10 eines Mikroschalters 8 in die Nute eines kleinen Rades 9 fällt, welche an der Unterseite des Deckels 7 angebracht sind. Der Dosiertrichters 1 befindet sich auf einer Waage 14, die Unterseite des Dosiertrichters 1 ist mit einer Dosierschnecke 17 verbunden, auf welche wiederum ein Ventil V4 folgt. Mit der Waage 14 kann das Gewicht der sich im Dosiertrichter 1 befindlichen Komponenten bestimmt werden.

Der Mikroschalter 8, das Ventil 13, die Waage 14, die Dosierschnecke 17 sowie das Ventil V4 werden von einer Recheneinheit 22 gesteuert, welche auch mit einem Lichtstift 11 verbunden ist. Der Mikroschalter 8, das Ventil 13, die Dosierschnecke 17 sowie das Ventil V4 verfügen jeweils zusätzlich über dem Fachmann geläufige Stellantriebe, insbesondere elektrische Stellantriebe für den Mikroschalter 8, die Dosierschnecke 17 und das Ventil V4 sowie einen pneumatischen Stellantrieb für das Ventil 13.

Die Flüssigkeitsreservoireinheit II enthält ein Vorratsgefäß 21, das an eine Leitung L1 angeschlossen ist, welche ein Ventil V1, bevorzugt ein Magnetventil, zwischengeschaltet hat. Das Vorratsgefäß 21 ist entweder ein Tank oder ein sonstiges Behältnis, das sich zur Aufbewahrung einer Flüssigkeit F1 eignet. Als Flüssigkeit F1 wird insbesondere Wasser verwendet Auf das Ventil V1 nachfolgend ist der Leitung L1 ein Durchflussmesser 19 zwischengeschaltet, welcher mit der Recheneinheit 22 verbunden ist. Die Leitung L 1 kann zusätzlich mit einem zwischengeschalteten Ventil 23, welches bevorzugt ein Magnetventil ist, an ein externes Flüssigkeitsreservoir, beispielsweise eine Wasserleitung, angeschlossen sein. Dieser Abzweig der Leitung L1 befindet sich gegebenenfalls zwischen dem Ventil V1 und dem Durchflussmesser 19. Des Weiteren enthält die Flüssigkeitsreservoireinheit II ein Vorratsgefäß 3, das über eine Pumpe P4 ebenfalls an die Leitung L1 angeschlossen ist. Das Vorratsgefäß 3 dient zur Aufbewahrung einer Flüssigkeit F2, insbesondere zur Aufbewahrung von flüssigen oder gelösten Stabilisatoren. Es kann sich dabei um einen einzelnen aber auch um ein Gemisch von mehreren Stabilisatoren handeln.

Das Ventil V1 und die Pumpe P4 werden von der Recheneinheit 22 gesteuert, beide verfügen über jeweils einen elektrischen Stellantrieb. Gegebenenfalls kann das Ventil 23 ebenfalls von der Recheneinheit 22 gesteuert werden sowie über einen elektrischen Stellantrieb verfügen.

In einer zusätzlichen Ausführung der erfindungsgemäßen Vorrichtung enthält die Flüssigkeitsreservoireinheit II weitere Vorratsgefäße gemäß dem Vorratsgefäß 3, welche jeweils mit einer dazwischengeschalteten Pumpe an die Leitung L1 angeschlossen sind.

In einer weiteren Ausführung der erfindungsgemäßen Vorrichtung wird auf ein Behältnis für die Flüssigkeit F1 verzichtet. Die Leitung L1 wird in diesem Fall über das Ventil 23 mit einer externen Flüssigkeitsquelle verbunden, wie zum Beispiel einer Wasserleitung oder einer Leitung, die zu einem extern von der erfindungsgemäßen Vorrichtung befindlichen Flüssigkeitsvorratsgefäß führt. Ebenso kann auch eine Vorrichtung konzipiert werden, deren Flüssigkeitsreservoireinheit II kein Vorratsgefäß 3 mit angeschlossener Pumpe P4 enthält.

Die Mischeinheit III enthält ein Mischgefäß 2, dessen Oberseite über ein Verbindungsstück 25 mit dem Ventil V4 verbunden ist, einem Bestandteil der Dosiereinheit für pulverförmige Enzyme I. Auf diesem Wege gelangen pulverförmige Enzyme aus dem Dosiertrichter 1 in das Mischgefäß 2. In einer bevorzugten Ausführung der erfindungsgemäßen Vorrichtung ist das Verbindungsstück 25 ganz oder in bestimmten Bereichen flexibel beschaffen. Weiterhin mündet die Leitung L1, ein Bestandteil der Flüssigkeitsreservoireinheit II, in die Oberseite des Mischgefaßes 2. Im Inneren des Mischgefäßes 2 schließt die Leitung L1 mit einer Öffnung 18 ab, die zum Zweck hat, die aus der Leitung L1 austretende Flüssigkeit, welche aus der Flüssigkeitsreservoireinheit II stammt, im Gehäuse des Mischgefäßes 2 großflächig zu verteilen. Bevorzugt werden als Öffnung 18 ein oder mehrere miteinander verknüpfte Düsen verwendet, besonders bevorzugt ein oder mehrere miteinander verknüpfte rotierende Düsen, die über einen elektrischen Stellantrieb verfügen können sowie von der Recheneinheit 22 gesteuert werden können. Zusätzlich sind im Inneren des Mischgefäßes 2 drei in ihrer Positionierung variable Niveaumelder zur Bestimmung des sich im Mischgefäß 2 befindlichen Flüssigkeitsvolumens angebracht, die jeweils mit der Recheneinheit 22 verbunden sind. An der Unterseite des Mischgefäßes 2 tritt eine Leitung L2 aus, der eine Pumpe P 1 sowie ein Ventil V2, welches insbesondere ein Magnetventil ist, zwischengeschaltet ist. Am dem anderen Ende ist die Leitung L2 mit einer Einlassvorrichtung 15 verbunden, die an verschiedenen dafür vorgesehenen Stellen in das Innere des Mischgefäßes 2 eingeführt werden kann, wobei die Leitung L2 ganz oder in bestimmten Bereichen flexibel beschaffen ist.

Als Einlassvorrichtung 15 eignen sich alle dafür denkbaren Vorrichtungen, insbesondere aber lanzenförmige Einlassvorrichtungen. In einer besonders bevorzugten Ausführung handelt es sich um drehbare Einlassvorrichtungen, die über einen elektrischen Stellantrieb angetrieben werden können. Auf diesen Einlassvorrichtungen sind ein oder mehrere Öffnungen 16 angebracht, in bevorzugter Weise Düsen, die wiederum ebenfalls rotierend sein können und gegebenenfalls über einen elektrischen Stellantrieb angetrieben werden. Das Mischgefäß 2, die Pumpe P1, das Ventil V2, die Leitung L1, die Einlassvorrichtung 15 sowie die Öffnung 16 bilden einen Kreislauf 4, welcher zur Durchmischung und Lösungshomogenisierung der sich im Mischgefäß 2 befindlichen Komponenten dient. Die Öffnungen 16 sowie 18 bewirken unter anderem, die daraus austretende Flüssigkeit großflächig über die Gehäuseinnenwand des Mischgefäßes 2 zu verteilen, um eventuell an der Innenwand anhaftendes Enzym, welches aus dem Dosiertrichter 1 über die Dosierschnecke 17, das Ventil V4 und das Verbindungsstück 25 in das Mischgefäß 2 überführt wurden, von der Innenwand abzuwaschen und wieder dem Lösungsprozess zuzuführen.

Das Ventil V2 und die Pumpe P1 werden ebenfalls von der Recheneinheit 22 gesteuert, das Ventil V2 und die Pumpe P1 verfügen über jeweils einen elektrischen Stellantrieb.

Die Dosiereinheit der enzymhaltigen Flüssigkeit IV enthält ein Dosiergefäß 5, in dessen Oberteil eine Leitung L3 mündet, welche ein Ventil V3, das bevorzugt ein Magnetventil ist, zwischengeschaltet hat und die an geeigneter Stelle von der Leitung L2 abzweigt. Über die Leitungen L2 und L3 wird der Inhalt des Mischgefäßes 2 in das Dosiergefäß 5 überführt. Innerhalb des Dosiergefäßes 5 sind zwei in ihrer Positionierung variable Niveaumelder angebracht, die zur Bestimmung des sich im Dosiergefäß 5 befindlichen Flüssigkeitsvolumens dienen und jeweils an die Recheneinheit 22 angeschlossen sind. An der Unterseite des Dosiergefäß 5 ist eine Leitung L4 angebracht. Das Ventil V3 werden ebenfalls von der Recheneinheit 22 gesteuert und verfügt zusätzlich über einen elektrischen Stellantrieb.

Die Aufbringvorrichtung V enthält die Leitung L4, an die sich eine oder mehrere parallel angeordnete Dosiereinheiten 20 anschließen, welche jeweils im Wesentlichen eine Dosierpumpe DP, ein Durchflussmesser DF, eine oder mehrere Öffnungen DO sowie die dazugehörigen Leitungen DL enthalten. Die Öffnungen DO befinden sich dabei am Ende der jeweiligen Leitung DL und sind so angebracht, dass die aus der Leitung DL austretende Flüssigkeit auf die an den Öffnungen vorbeitransportierten festen Futterprodukte aufgebracht werden. In einer bevorzugten Form der erfindungsgemäßen Vorrichtung wird die aus den Öffnungen DO austretende Flüssigkeit auf die Futterprodukte aufgesprüht oder aufgespritzt. Bei den Öffnungen DO handelt es sich bevorzugt um Düsen, besonders bevorzugt um rotierende Düsen. Um die aus den Öffnungen DO austretende Flüssigkeit feiner über die festen Futterprodukte zu verteilen, können der austretenden Flüssigkeit zusätzlich Gase, wie beispielsweise Luft, beigemischt werden. Solch spezielle Vorrichtungen zum Einleiten von Gasen in Flüssigkeiten sind dem Fachmann genauso bekannt wie die spezielle Transportvorrichtungen für feste Futterprodukte und werden hier folglich nicht näher ausgeführt. Der Einsatz von mehreren parallel angeordneten Dosiereinheiten hat den Vorteil, dass mehrere, unterhalb von den entsprechenden Dosiervorrichtungen, ebenso parallel verlaufenden Transportvorrichtungen bedient werden können, wodurch eine größere Menge sowie eventuell unterschiedliche Arten von festen Futterprodukten getrennt voneinander und zur selben Zeit mit gelösten Enzymen behandelt werden können. Durch Steuerung der entsprechenden Dosierpumpen DP können unterschiedliche Flüssigkeitsvolumina pro Zeiteinheit aus den entsprechenden Öffnungen auf die festen Mischfutterprodukte aufgetragen werden.

Die Dosierpumpen DP, die Durchflussmesser DF sowie gegebenenfalls die Öffnungen DO werden ebenfalls von der Recheneinheit 22 gesteuert und verfügen jeweils zusätzlich über einen elektrischen Stellantrieb.

Das über die Rechneinheit 22 gesteuerte Zusammenspiel der einzelnen Komponenten der erfindungsgemäßen Vorrichtung untereinander soll im Folgenden anhand eines möglichen Anwendungsbeispieles näher erläutert werden. Zunächst werden die pulverförmigen Enzyme in den Vorratstrichter 6 gefüllt, wofür der Deckel 7 geöffnet werden muss. Der Deckel 7 lässt sich nur öffnen, wenn das Ventil 13 geschlossen ist und der mit dem Lichtstift 11 gelesene Strichcode der pulverförmigen Enzyme, der auf der jeweiligen Verpackungseinheit angebracht ist, mit einem von den in die Recheneinheit 22 zuvor eingelesenen und dort abgespeicherten Strichcodes übereinstimmt. Durch diese Sicherheitsvorkehrung wird die Gefahr des Einfüllens falscher Feststoffe vermindert.

Der Inhalt des Vorratsgefäßes 6 wird durch Öffnen des Ventils 13 vollständig oder teilweise in den Dosiertrichter 1 überführt. Das Ventil 13 kann nur geöffnet werden, wenn (a) die von der Waage 14 ermittelte Komponentenmenge, die sich im Inneren des Dosiertrichters 1 befindet, unter ein in der Recheneinheit 22 festgesetztes Gewicht G1 gefallen ist, (b) die Dosierschnecke 17 nicht in Betrieb ist und (c) der Deckel 7 geschlossen ist. Wenn die von der Waage 14 ermittelte Komponentenmenge, die sich im Inneren des Dosiertrichters 1 befindet, unter ein in der Recheneinheit 22 festgesetztes Gewicht G1 gefallen ist, steuert die Recheneinheit 22 gegebenenfalls das Öffnen des Ventiles 13. Erreicht die von der Waage 14 ermittelte Komponentenmenge, die sich im Inneren des Dosiertrichters 1 befindet, ein in der Recheneinheit 22 festgesetztes Gewicht G2, schließt sich das Ventil 13 wieder. Für den Fall, dass nicht bis zu dem Gewicht G2 aufgefüllt werden kann, erscheint von der Recheneinheit 22 an geeigneter Stelle die Nachricht, dass der Vorratstrichter 6 nachgefüllt werden muss.

Ist im Inneren des Mischgefäß 2 das Flüssigkeitsvolumen unter ein von einem Niveaumelder ermitteltes Niveau mit dem Wert N 1 gefallen, wird der Kreislauf 4 in Betrieb gesetzt. Durch Steuerung mit der Recheneinheit 22 wird die Pumpe P1 gestartet und das Ventil V2 geöffnet, nachdem zuvor gegebenenfalls das Ventil V3 geschlossen wurde. Zusätzlich wird das Mischgefäß 2 mit einer aus der Flüssigkeitsreservoireinheit II stammenden Flüssigkeit bis auf ein von einem zweiten Niveaumelder ermittelten Niveau mit dem Wert N2 aufgefüllt. Die Zugabe der aus der Flüssigkeitsreservoireinheit II stammenden Flüssigkeit F1 erfolgt durch rechnergesteuertes Öffnen des Ventiles V1, das zuzugebende Flüssigkeitsvolumen wird von dem Durchflussmesser 19 gemessen. Ist im Inneren des Mischgefäßes 2 ein von dem zweiten Niveaumelder ermitteltes Niveau mit dem Wert N2 erreicht worden, wird das Ventil V1 rechnergesteuert geschlossen. Durch Inbetriebnahme der Dosierschraube 17 und gleichzeitiges Öffnen des Ventiles V4 wird eine von der Recheneinheit 22 auf den Niveauwert N2 abgestimmte Menge des Inhaltes des Dosiertrichters 1 in das Mischgefäß 2 überführt, worauf die Dosierschraube 17 abgestellt sowie das Ventil V4 geschlossen wird. Es können beliebige Konzentrationen an Enzymlösung im Mischgefäß 2 eingestellt werden.

Im Anschluss daran kann gegebenenfalls eine weitere Flüssigkeit F2 durch rechnergesteuerte Aktivierung der Pumpe P4 beigemengt werden. Bevorzugterweise wird die Menge der zugegebenen Flüssigkeit F2 über eine in der Recheneinheit 22 festgesetzte Anzahl an Pumpenschlägen der Pumpe P4 gesteuert, wonach die Pumpe P4 rechnergesteuert abgestellt wird. Die Zugabe der Flüssigkeit F2 kann gegebenenfalls auch zeitgleich mit der Zugabe der Flüssigkeit F1 erfolgen, wobei die Pumpe P4 analog zu dem oben Beschriebenen von der Recheneinheit 22 gesteuert wird.

Der Kreislauf 4 bleibt zur Lösungshomogenisierung für beliebig lange Zeitintervalle, die von der Recheneinheit 22 bestimmt und kontrolliert werden, aktiviert. Im Anschluss daran werden die Pumpe P1 sowie das Ventil V2 rechnergesteuert abgestellt bzw. geschlossen.

Ist im Inneren des Mischgefäß 2 das Flüssigkeitsvolumen unter ein von einem dritten Niveaumelder ermitteltes Niveau mit dem Wert N3 gefallen, wird von der Recheneinheit 22 ein Warnhinweis an geeigneter Stelle angezeigt.

Wenn im Dosiergefäß 5 das Volumen des Gefäßinhaltes unter ein von einem Niveaumelder ermittelten Niveau mit dem Wert N4 gefallen ist, wird der Inhalt des Mischgefäßes 2 bis zu einem Niveau mit dem Wert N5, das von einem weiteren, sich im Inneren des Dosiergefäßes 5 befindlichen Niveaumelder ermitteltet wird, über die Leitungen L2 und L3 in das Dosiergefäß 5 überführt. Die Recheneinheit 22 veranlasst hierfür das Öffnen das Ventil V3 und startet die Pumpe P1. Ist im Dosiergefäß 5 das von dem zweiten Niveaumelder ermittelte Niveau mit dem Wert N5 erreicht, werden die Pumpe P1 sowie das Ventil V3 rechnergesteuert abgestellt bzw. geschlossen. Das Auffüllen des Dosiergefäßes 5 kann von der Recheneinheit 22 erst veranlasst werden, wenn der zu der Mischeinheit III zugehörende Kreislauf 4 abgestellt ist. Aus diesem Grund sind die zugelassenen Höchst- und Tiefstände des Behälterinhaltes des Mischgefäßes 2 und des Dosiergefäßes 5, die von den entsprechenden Niveaumelder festgelegt werden, sowie das von der Waage 14 ermittelte Mindestgewicht des Inhaltes des Dosiertrichters 1 so aufeinander abgestimmt, dass ein Leerlaufen der jeweiligen anderen Komponenten verhindert wird.

Der Wert N4 im Dosiergefäß 5 wird so hoch angesetzt, dass ein vollständiger Lösungszyklus, d. h. Nachfüllen des Dosiertrichters 1, Flüssigkeits- und Enzymzugabe in das Mischgefäß 2 sowie die Lösungshomogenisierung mit dem Kreislauf 4, problemlos durchgeführt werden kann, ohne dass dabei das Dosiergefäß 5 leer läuft.

Sofern die Durchflussmesser DF1 bis DFn der Dosiereinheit 20 nicht mehr die in der Recheneinheit 22 festgelegten Mengen an durchfließender Flüssigkeit messen, wird von der Recheneinheit 22 ein Warnhinweis an geeigneter Stelle angezeigt.

Des Weiteren bleibt festzuhalten, dass die Recheneinheit 22 das Zusammenspiel der einzelnen Vorrichtungskomponenten, insbesondere die für die Mischeinheit III relevanten Schritte, auch in vom vorstehenden Beispiel abweichender Weise steuern kann. Die Abstimmung der an den einzelnen Verfahrensschritten beteiligten Vorrichtungskomponenten erfolgt sinngemäß. Ausdrücklich erwähnt sei die Möglichkeit eines zeitversetzten Betätigens des Kreislaufes 4 und des Auffüllens des Mischgefäßes 2 mit Flüssigkeit aus der Flüssigkeitsreservoireinheit II sowie mit Feststoffen aus der Dosiereinheit für pulverftirmige Enzyme I. Die Reihenfolge dieser drei Schritte kann gegebenenfalls in beliebiger Weise variiert werden.

Sämtliche Anlagenkomponenten der erfindungsgemäßen Vorrichtung sind so konzipiert, dass neben des rechnergesteuerten Standardbetriebes auch ein manueller Betrieb der einzelnen Anlagekomponenten möglich ist.

Zur Reinigung der erfindungsgemäßen Vorrichtung sind bei diversen Vorrichtungskomponenten, insbesondere dem Dosiertrichter 1, dem Mischgefäß 2, dem Vorratsgefäß 3 sowie dem Dosiergefäß 5, an geeigneter Stelle dafür geeignete Öffnungen oder Ventile angebracht, die sich entweder von der Recheneinheit 22 oder manuell steuern lassen.

Als Enzyme eignen sich alle gängigen Enzyme, die in der Futtermittelindustrie Verwendung finden, insbesondere das Enzym Vitase und NSP's (non starch polysaccharids). Zum Lösen dieser Substanzen wird bevorzugt reines Wasser als Flüssigkeit eingesetzt.

Die erfindungsgemäße Vorrichtung eignet sich besonders zur Herstellung von Enzymlösungen und eventueller Beimischung flüssiger oder gelöster Zusatzstoffe, wie Stabilisatoren, im Chargenverfahren sowie dem gleichzeitigen Aufbringen dieser Lösungen auf ein oder mehrere Chargen von festen Futterprodukten.

### Bezugszeichenliste

- 1: Dosiertrichter
- 2: Mischgefäß
- 3: Vorratsgefäß
- 4: Kreislauf
- 5: Dosiergefäß
- 6: Vorratstrichter
- 7: Deckel
- 8: Mikroschalter
- 9: Rad mit kleiner Nute
- 10: Nocken
- 11: Lichtstift
- 12: Schloss
- 13: Ventil
- 14: Waage
- 15: Einlassvorrichtung
- 16: Öffnung
- 17: Dosierschnecke
- 18: Öffnung
- 19: Durchflussmesser
- 20: Dosiereinheiten
- 21: Vorratsgefäß
- 22: Recheneinheit
- 23: Ventil
- 24: Verbindungsstück
- 25: Verbindungsstück

- L =: Leitung
- N =: Niveaumelder
- V =: Ventil
- G =: Gewicht
- P =: Pumpe
- D =: Dosier-
- F =: Durchflussmesser
- O =: Öffnung

- I: Dosiereinheit für pulverförmige Enzyme
- II: Flüssigkeitsreservoireinheit
- III: Mischeinheit
- IV: Dosiereinheit der enzymhaltigen Flüssigkeit
- V: Aufbringvorrichtung

## Patentansprüche

1. Verfahren zum Dosieren, Lösen und Aufbringen von Enzymen auf feste Futterprodukte, das **dadurch gekennzeichnet ist, dass**
a) über eine Leitung (L1) und eine Öffnung (18) eine Flüssigkeit (F1) in ein Mischgefäß (2) überführt wird,
b) Enzyme in Pulverform aus einem Dosiertrichter (1) in das Mischgefäß (2) überführt und in der zuvor zugegebenen Flüssigkeit (F1) gelöst werden.
c) der Inhalt des Mischgefäßes (2) zur Lösungshomogenisierung mittels einer Pumpe (P1) in frei bestimmbaren Zeitintervallen durch einen Kreislauf (4) gepumpt wird, der im Wesentlichen
(c1) das Mischgefäß (2),
(c2) die Pumpe (P1),
(c3) ein Ventil (V2),
(c4) eine sich im Inneren des Mischgefäßes (2) befindliche Eintragsvorrichtung (15), auf welcher eine oder mehrere Öffnungen (16) angebracht sind,
(c5) und eine Leitung (L2), die an verschiedenen Stellen an das Mischgefäß (2) anschließbar ist, wobei das eine Ende der Leitung (L2) mit dem Gefäßboden des Mischgefäßes (2) und das andere Ende mit der Eintragsvorrichtung (15) verbunden ist,
enthält, worauf
d) der Inhalt des Mischgefäßes (2) in ein Dosiergefäß (5) überführt wird, woraus
e) der Inhalt des Dosiergefäßes (5) in eine oder mehrere parallel angeordnete Dosiereinheiten (20) weitergeleitet wird, um von dort abschließend auf die festen Futterprodukte aufgebracht zu werden.

2. Verfahren nach Anspruch 1, **dadurch gekennzeichnet, dass** der Inhalt des Mischgefäßes (2) nicht vollständig in das Dosiergefäß (5) überführt wird.

3. Verfahren nach den Ansprüchen 1 oder 2, **dadurch gekennzeichnet, dass** die gelösten Enzyme auf pelletierte Futterprodukte aufgebracht werden.

4. Verfahren nach einem der Ansprüche 1 bis 3, **dadurch gekennzeichnet, dass** als Flüssigkeit (F1) bevorzugt Wasser verwendet wird.

5. Verfahren nach einem der Ansprüche 1 bis 4, **dadurch gekennzeichnet, dass** die gelösten Enzyme auf das feste Futterprodukt aufgesprüht oder aufgespritzt werden.

6. Verfahren nach einem der Ansprüche 1 bis 5, **dadurch gekennzeichnet, dass** der Kreislauf (4) zur Homogenisierung des Inhaltes des Mischgefäßes (2) durch Starten der Pumpe (P2) zu beliebigen Zeitpunkten und für frei bestimmbare Zeitintervalle eingeschaltet werden kann.

7. Verfahren nach einem der Ansprüche 1 bis 6, **dadurch gekennzeichnet, dass**
a) über eine Leitung (L1) und eine Öffnung (18) eine Flüssigkeit (F1) in ein Mischgefäß (2) überführt wird,
b) Enzyme in Pulverform aus einem Dosiertrichter (1) in das Mischgefäß (2) überführt und in der zuvor zugegebenen Flüssigkeit (F1) gelöst werden.
c) eine zweite Flüssigkeit (F2) aus einem weiteren Vorratsgefäß (3) mit einer Pumpe (P4) in das Mischgefäß (2) gepumpt wird, wobei die Flüssigkeiten (F1) und (F2) separat oder zusammen unter Verwendung der Öffnung (18) in das Mischgefäß (2) eingeleitet werden,
d) der Inhalt des Mischgefäßes (2) zur Lösungshomogenisierung mittels einer Pumpe (P1) in frei bestimmbaren Zeitintervallen durch einen Kreislauf (4) gepumpt wird, der im Wesentlichen
(d1) das Mischgefäß (2),
(d2) die Pumpe (P1),
(d3) ein Ventil (V2),
(d4) eine sich im Inneren des Mischgefäßes (2) befindliche Eintragsvorrichtung (15), auf welcher eine oder mehrere Öffnungen (16) angebracht sind,
(d5) und eine Leitung (L2), die an verschiedenen Stellen an das Mischgefäß (2) angeschlossen werden kann, wobei das eine Ende der Leitung (L2) mit dem Gefäßboden des Mischgefäßes (2) und das andere Ende mit der Eintragsvorrichtung (15) verbunden ist,
enthält, worauf
e) der Inhalt des Mischgefäßes (2) in ein Dosiergefäß (5) überführt wird, woraus
f) der Inhalt des Dosiergefäßes (5) in eine oder mehrere parallel angeordnete Dosiereinheiten (20) weitergeleitet wird, um von dort abschließend auf die festen Futterprodukte aufgebracht zu werden.

8. Verfahren nach Anspruch 7, **dadurch gekennzeichnet, dass** als Flüssigkeit (F2) bevorzugt ein oder mehrere flüssige oder gelöste Stabilisatoren verwendet werden.

9. Verfahren nach Anspruch 7, **dadurch gekennzeichnet, dass**, sobald das Flüssigkeitsvolumen im Mischgefäß (2) ein von einem Niveaumelder ermitteltes Niveau mit dem Wert (N1) unterschritten hat, eine Flüssigkeit (F1) durch Öffnen eines Ventiles (V1) über eine Leitung (L1) und eine sich am oberen Teil der Gehäuseinnenwand des Mischgefäßes (2) befindliche Öffnung (18) in das Mischgefäß (2) gefüllt wird und das zugegebene Flüssigkeitsvolumen durch rechnergestützte Steuerung des Ventiles (V1) dosiert wird, bis im Inneren des Mischgefäßes (2) das Flüssigkeitsvolumen ein über einen Niveaumelder ermitteltes Niveau (N2) erreicht hat.

10. Verfahren nach Anspruch 9, **dadurch gekennzeichnet, dass** die sich am oberen Teil der Gehäuseinnenwand des Mischgefäßes (2) befindende Öffnung (18) eine Düse, insbesondere eine rotierende Düse ist.

11. Verfahren nach einem der Ansprüche 9 oder 10, **dadurch gekennzeichnet, dass** eine auf das Niveau (N2) bezogene Menge an pulverförmigen Enzymen durch Starten der Dosierschnecke (17) und Öffnen des Ventiles (V4) aus dem Dosiertrichter (1) durch ein Verbindungsstück (25) in das Mischgefäß (2) überführt wird.

12. Verfahren nach einem der Ansprüche 9 bis 11, **dadurch gekennzeichnet, dass** der Inhalt des Mischgefäßes (2) automatisch durch Öffnen des Ventils (V3) und Schließen des Ventils (V2) aus dem Mischgefäß (2) mit einer Pumpe (P1) über die Leitungen (L2) und (L3) in das Dosiergefäß (5) überführt wird, wenn das mit einem Niveaumelder ermittelte Niveau des Flüssigkeitsvolumens im Dosiergefäß (5) unter einen Wert (N4) gefallen ist, bis das Flüssigkeitsvolumen ein von einem Niveaumelder ermitteltes Niveau mit dem Wert (N5) erreicht, worauf das Ventil (V3) sowie die Pumpe (P1) automatisch geschlossen bzw. abgestellt werden.

13. Verfahren nach einem der Ansprüche 9 bis 12, **dadurch gekennzeichnet, dass** der Inhalt des Dosiergefäßes (5) automatisch durch eine Leitung (L4) in eine oder mehrere parallel angeordnete Dosiereinheiten (20) zum Aufbringen auf feste Futterprodukte weitergeleitet werden, wobei die Dosiereinheiten (20) jeweils
a) eine Dosierpumpe (DP)
b) einen Durchflussmesser (DF)
c) eine oder mehrere Öffnungen (DO) und
d) die dazugehörigen Leitungen (DL).
enthalten.

14. Vorrichtung zur Durchführung des Verfahrens gemäß einem oder mehrerer der Ansprüche 1 bis 13, enthaltend
a) eine Leitung (L1), eine Öffnung (18) und ein Mischgefäß (2),
b) einen Dosiertrichter (1),
c) ein Vorratsgefäß (3) mit einer Pumpe (P4),
d) einen Kreislauf (4), der im Wesentlichen
(d1) das Mischgefäß (2),
(d2) eine Pumpe (P1),
(d3) ein Ventil (V2),
(d4) eine sich im Inneren des Mischgefäßes (2) befindliche Eintragsvorrichtung (15), auf welcher eine oder mehrere Öffnungen (16) angebracht sind,
(d5) und eine Leitung (L2), die an verschiedenen Stellen an das Mischgefäß (2) angeschlossen werden kann, wobei das eine Ende der Leitung (L2) mit dem Gefäßboden des Mischgefäßes (2) und das andere Ende mit der Eintragsvorrichtung (15) verbunden ist,
enthält,
e) ein Dosiergefäß (5),
f) eine oder mehrere parallel angeordnete Dosiereinheiten (20).

15. Vorrichtung nach Anspruch 14, **dadurch gekennzeichnet, dass** der Dosiertrichter (1) auf einer Waage (14) angebracht und über ein Verbindungsstück (24) mit einem Vorratstrichter (6) verbunden ist, wobei sich zwischen dem Dosiertrichter (1) und dem Vorratstrichter (6) ein Ventil (13) befindet.

16. Vorrichtung nach Anspruch 14 oder 15, **dadurch gekennzeichnet, dass** das Mischgefäß (2) einen Niveaumelder und eine sich am oberen Teil der Gehäuseinnenwand des Mischgefäßes (2) befindliche Öffnung (18) enthält.

17. Vorrichtung nach Anspruch 16, **dadurch gekennzeichnet, dass** die sich am oberen Teil der Gehäuseinnenwand des Mischgefäßes (2) befindliche Öffnung (18) eine Düse, insbesondere eine rotierende Düse ist.

18. Vorrichtung nach einem der Ansprüche 14 bis 17, **dadurch gekennzeichnet, dass** die Dosiereinheiten (20) jeweils
e) eine Dosierpumpe (DP)
f) einen Durchflussmesser (DF)
g) eine oder mehrere Öffnungen (DO) und
h) die dazugehörigen Leitungen (DL)
enthalten.

19. Vorrichtung nach einem der Ansprüche 14 bis 18, **dadurch gekennzeichnet, dass** die Vorrichtung rechnergestützt ist.

## Claims

1. A process for metering and dissolving enzymes and applying them to solid feed products, which comprises
a) transferring a liquid (F1) via a line (L1) and a port (18) into a mixing vessel (2),
b) transferring enzymes in powder form from a metering hopper (1) into the mixing vessel (2) and dissolving them in the previously added liquid (F1),
c) pumping the contents of the mixing vessel (2), to homogenize the solution, by means of a pump (P1) in freely settable time intervals through a circuit (4) which essentially comprises
(c1) the mixing vessel (2),
(c2) the pump (P1),
(c3) a valve (V2),
(c4) an introduction apparatus (15) situated within the interior of the mixing vessel (2), on which are mounted one or more ports (16),
(c5) and a line (L2) which can be attached at various points to the mixing vessel (2), the one end of the line (L2) being connected to the bottom of the mixing vessel (2) and the other end being connected to the introduction apparatus (15),
whereupon
d) the contents of the mixing vessel (2) being transferred into a metering vessel (5), from which
e) the contents of the metering vessel (5) are passed on into one or more parallel metering units (20) in order from there finally to be applied to the solid feed products.

2. The process according to claim 1, wherein the contents of the mixing vessel (2) are not completely transferred to the metering vessel (5).

3. The process according to claims 1 or 2, wherein the dissolved enzymes are applied to the pelleted feed products.

4. The process according to one of claims 1 to 3, wherein the liquid (F1) is preferably water.

5. The process according to one of claims 1 to 4, wherein the dissolved enzymes are sprayed or injected onto the solid feed product.

6. The process according to one of claims 1 to 5, wherein the circuit (4) for homogenizing the contents of the mixing vessel (2) can be switched on at any desired time points and for freely settable time intervals by starting the pump (P2).

7. The process according to one of claims 1 to 6, wherein
a) via a line (L1) and a port (18) one liquid (F1) is transferred into a mixing vessel (2),
b) enzymes in powder form are transferred from a metering hopper (1) into the mixing vessel (2) and are dissolved in the previously added liquid (F1),
c) a second liquid (F2) is pumped from a further reservoir vessel (3) by a pump (P4) into the mixing vessel (2), the liquids (F1) and (F2) being introduced separately or together into the mixing vessel (2) using one port (18),
d) the contents of the mixing vessel (2), to homogenize the solution, are pumped by means of a pump (P1) in freely settable time intervals through a circuit (4) which essentially comprises
(d1) the mixing vessel (2),
(d2) the pump (P1),
(d3) a valve (V2),
(d4) an introduction apparatus (15) situated within the interior of the mixing vessel (2), on which are mounted one or more ports (16),
(d5) and a line (L2) which can be connected to the mixing vessel (2) at various points, the one end of the line (L2) being connected to the bottom of the mixing vessel (2) and the other end being connected to the introduction apparatus (15),
whereupon
e) the contents of the mixing vessel (2) are transferred into a measuring vessel (5), from which
f) the contents of the metering vessel (5) are passed on into one or more parallel metering units (20), in order from there finally to be applied to the solid feed products.

8. The process according to claim 7, wherein the liquid (F2) is preferably one or more liquid or dissolved stabilizers.

9. The process according to claim 7, wherein, as soon as the liquid volume in the mixing vessel (2) has fallen below a level determined by a level indicator having the value (N1), a liquid (F1) is charged into the mixing vessel (2) by opening a valve (V1) via a line (L1) and a port (18) situated at the upper part of the housing internal wall of the mixing vessel (2) and the added liquid volume is metered by computer-aided control of the valve (V1) until, in the interior of the mixing vessel (2), the liquid volume has reached a level (N2) determined via a level indicator.

10. The process according to claim 9, wherein the port (18) situated on the upper part of the housing internal wall of the mixing vessel (2) is a nozzle, in particular a rotating nozzle.

11. The process according to claim 9 or 10, wherein an amount of pulverulent enzymes based on the level (N2) is transferred into the mixing vessel (2) from the metering hopper (1) via a connection piece (25) by starting the metering auger (17) and opening the valve (V4).

12. The process according to one of claims 9 to 11, wherein the contents of the mixing vessel (2) are automatically transferred to the metering vessel (5) from the mixing vessel (2) via a pump (P1) via the lines (L2) and (L3) automatically by opening the valve (V3) and closing the valve (V2), if the level of the liquid volume in the metering vessel (5) which is determined by a level indicator has fallen below a value (N4) until the liquid volume reaches a level determined by a level indicator having the value (N5), whereupon the valve (V3) and the pump (P1) are automatically closed and shut off, respectively.

13. The process according to one of claims 9 to 12, wherein the contents of the metering vessel (5) are automatically passed on via a line (L4) into one or more parallel metering units (20) for application to solid feed products, the metering units (20) each comprising
a) a metering pump (DP)
b) a flow meter (DF)
c) one or more ports (DO) and
d) the associated lines (DL).

14. An apparatus according to one or more of claims 1 to 13, comprising
a) a line (L1), a port (18) and a mixing vessel (2),
b) a metering hopper (1)
c) a reservoir vessel (3) having a pump (P4)
d) a circuit (4) which essentially comprises
(d1) the mixing vessel (2)
(d2) a pump (P1),
(d3) a valve (V2),
(d4) an introduction apparatus (15) situated within the interior of the mixing vessel (2), on which are mounted one or more ports (16),
(d5) and a line (L2) which can be attached to the mixing vessel (2) at various points, the one end of the line (L2) being connected to the bottom of the mixing vessel (2) and the other end being connected to the introduction apparatus (15),
e) a metering vessel (5),
f) one or more parallel metering units (20).

15. The apparatus according to claim 14, wherein the metering hopper (1) is mounted on a balance (14) and is connected via a connection piece (24) to a reservoir hopper (6), a valve (13) being situated between the metering hopper (1) and the reservoir hopper (6).

16. The apparatus according to claim 14 or 15, wherein the mixing vessel (2) comprises a level indicator and a port (18) situated at the upper part of the housing internal wall of the mixing vessel (2).

17. The apparatus according to claim 16, wherein the port (18) situated on the upper part of the housing internal wall of the mixing vessel (2) is a nozzle, in particular a rotating nozzle.

18. The apparatus according to one of claims 14 to 17, wherein the metering units (20) each comprise
e) a metering pump (DP)
f) a flow meter (DF)
g) one or more ports (DO) and
h) the associated lines (DL).

19. The apparatus according to one of claims 14 to 18, which is computer aided.

## Revendications

1. Procédé de dosage, de dissolution et d'application d'enzymes sur des produits alimentaires solides,
**caractérisé en ce que**
a)'un liquide (F1) est transféré dans un récipient de mélange (2) par un conduit (L1) et une ouverture (18),
b) des enzymes sont, sous forme pulvérulente, transférées d'une trémie de dosage (1) dans le récipient de mélange (2) et sont dissoutes dans le liquide (F1) auparavant alimenté,
c) le contenu du récipient de mélange (2) est, pour une homogénéisation en solution, pompé au moyen d'une pompe (P1) dans des intervalles de temps librement déterminables au travers d'un circuit (4), qui contient essentiellement
(c1) le récipient de mélange (2),
(c2) la pompe (P1),
(c3) une vanne (V2),
(c4) un dispositif d'admission (15) qui est situé à l'intérieur du récipient de mélange (2) et sur lequel une ou plusieurs ouvertures (16) sont agencées,
(c5) et un conduit (L2), qui peut être raccordé en différents endroits au récipient de mélange (2), une extrémité du conduit (L2) étant reliée au fond du récipient de mélange (2) et l'autre extrémité au dispositif d'admission (15),
après quoi
d) le contenu du récipient de mélange (2) est transféré dans un récipient de dosage (5), à partir duquel
e) le contenu du récipient de dosage (5) est acheminé dans une ou plusieurs unités de dosage (20) disposées en parallèle, pour être ensuite appliqué à partir de là sur les produits alimentaires solides.

2. Procédé suivant la revendication 1, **caractérisé en ce que** le contenu du récipient de mélange (2) n'est pas totalement transféré dans le récipient de' dosage (5).

3. Procédé suivant les revendications 1 ou 2, **caractérisé en ce que** les enzymes dissoutes sont appliquées sur des produits alimentaires agglomérés en boulettes.

4. Procédé suivant l'une des revendications 1 à 3, **caractérisé en ce que**, comme liquide (F1), on utilise de préférence de l'eau.

5. Procédé suivant l'une des revendications 1 à 4, **caractérisé en ce que** les enzymes dissoutes sont aspergées ou projetées sur le produit alimentaire solide.

6. Procédé suivant l'une des revendications 1 à 5, **caractérisé en ce que** le circuit (4) pour l'homogénéisation du contenu du récipient de mélange (2) peut être mis en service par démarrage de la pompe (P2) à des moments quelconques et pendant des intervalles de temps librement déterminables.

7. Procédé suivant l'une des revendications 1 à 6, **caractérisé en ce que**
a) un liquide (F1) est transféré dans un récipient de mélange (2) par un conduit (L1) et une ouverture (18),
b) des enzymes sont, sous forme pulvérulente, transférées d'une trémie de dosage (1) dans le récipient de mélange (2) et sont dissoutes dans le liquide (F1) auparavant alimenté,
c) un deuxième liquide (F2) provenant d'un autre réservoir (3) est pompé à l'aide d'une pompe (P4) dans le récipient de mélange (2), les liquides (F1) et (F2) étant introduits séparément ou conjointement en utilisant l'ouverture (18) dans le récipient de mélange (2),
d) le contenu du récipient de mélange (2) est, pour l'homogénéisation en solution, pompé au moyen d'une pompe (P1) dans des intervalles de temps librement déterminables au travers d'un circuit (4) qui contient essentiellement
(d1) le récipient de mélange (2),
(d2) la pompe (P1),
(d3) une vanne (V2),
(d4) un dispositif d'admission (15) qui est situé à l'intérieur du récipient de mélange (2) et sur lequel une ou plusieurs ouvertures (16) sont agencées,
(d5) et un conduit (L2) qui peut être raccordé en différents endroits au récipient de mélange (2), une extrémité du conduit (L2) étant reliée au fond du récipient de mélange (2) et l'autre extrémité au dispositif d'admission (15),
après quoi
e) le contenu du récipient de mélange (2) est transféré dans un récipient de dosage (5) à partir duquel
f) le contenu du récipient de dosage (5) est acheminé dans' une ou plusieurs unités de dosage (20) disposées en parallèle, pour être ensuite appliqué à partir de là sur les produits alimentaires solides.

8. Procédé suivant la revendication 7, **caractérisé en ce que**, comme liquide (F2), on utilise de préférence un ou plusieurs agents stabilisants liquides ou en solution.

9. Procédé suivant la revendication 7, **caractérisé en ce que**, aussitôt que le volume de liquide dans le récipient de mélange (2) a dépassé vers le bas un niveau déterminé par un signaleur de niveau et ayant la valeur (N1), un liquide (F1) est chargé dans le récipient de mélange (2) par ouverture d'une vanne (V1) et en passant par un conduit (L1) et une ouverture (18) située dans la partie supérieure de la paroi interne du récipient de mélange (2) et le volume de liquide admis est dosé par une commande assistée par ordinateur de la vanne (V1) jusqu'à ce qu'à l'intérieur du récipient de mélange (2) le volume de liquide ait atteint un niveau (N2) déterminé par un signaleur de niveau.

10. Procédé suivant la revendication 9, **caractérisé en ce que** l'ouverture (18) située à la partie supérieure de la paroi interne du récipient de mélange (2) est une tuyère, en particulier une tuyère rotative.

11. Procédé suivant l'une des revendications 9 et 10, **caractérisé en ce qu'**une quantité spécifique au niveau (N2) d'enzymes sous forme pulvérulente est transférée de la trémie de dosage (1) dans le récipient de mélange (2) en passant par un élément de communication (25), par démarrage de la vis de dosage (17) et ouverture de la vanne (V4).

12. Procédé suivant l'une des revendications 9 à 11, **caractérisé en ce que** le contenu du récipient de mélange (2) est transféré automatiquement du récipient de mélange (2) dans le récipient de dosage (5) à l'aide d'une pompe (P1) et en passant par des conduits (L2) et (L3), par ouverture de la vanne (V3) et fermeture de la vanne (V2), lorsque le niveau du volume de liquide dans le récipient de dosage (5), déterminé par un signaleur de niveau, est tombé en dessous d'une valeur (N4), et cela jusqu'à ce que le volume de liquide ait atteint un niveau déterminé par un signaleur de niveau et ayant la valeur (N5), après quoi la vanne (V3) est automatiquement fermée et la pompe (P1) mise hors service.

13. Procédé suivant l'une des revendications 9 à 12, **caractérisé en ce que** le contenu du récipient de dosage (5) est automatiquement acheminé par un conduit (L4) dans une ou plusieurs unités de dosage (20) agencées parallèlement pour une application sur des produits alimentaires solides, les unités de dosage (20) comportant chacune
a) une pompe de dosage (DP),
b)' un débitmètre (DF),
c) une ou plusieurs ouvertures (DO), et
d) les conduits correspondants (DL).

14. Dispositif pour la mise en oeuvre du procédé suivant une ou plusieurs des revendications 1 à 13, comportant
a) un conduit (L1), une ouverture (18) et un récipient de mélange (2),
b) une trémie de dosage (1),
c) un réservoir (3) muni d'une pompe (P4),
d) un circuit (4) qui contient essentiellement
d1) le récipient de mélange (2),
d2) une pompe (P1),
d3) une vanne (V2),
d4) un dispositif d'admission (15) qui est situé à l'intérieur du récipient de mélange (2) et sur lequel sont agencées une ou plusieurs ouvertures (16), et
d5) un conduit (L2) qui peut être raccordé au récipient de mélange (2) en différents endroits, une extrémité du conduit (L2) étant reliée au fond du récipient de mélange (2) et l'autre extrémité au dispositif d'admission (15),
e) un récipient de dosage (5),
f) une ou plusieurs unités de dosage (20) agencées parallèlement.

15. Dispositif suivant la revendication 14, **caractérisé en ce que** la trémie de dosage (1) est agencée sur une balance (14) et est reliée à une trémie de réserve (6) par l'intermédiaire d'un élément de communication (24), une vanne (13) se situant entre la trémie de dosage (1) et la trémie de réserve (6) .

16. Dispositif suivant la revendication 14 ou 15, **caractérisé en ce que** le récipient de mélange (2) comporte un signaleur de niveau et une ouverture (18) qui est située à la partie supérieure de la paroi interne du récipient de mélange (2).

17. Dispositif suivant la revendication 16, **caractérisé en ce que** l'ouverture (18) située à la partie supérieure de la paroi interne du récipient de mélange (2) est une tuyère, en particulier une tuyère rotative.

18. Dispositif suivant l'une des revendications 14 à 17, **caractérisé en ce que** les unités de dosage (20) comportent chacune
e) une pompe de dosage (DP),
f) un débitmètre (DF),
g) une ou plusieurs ouvertures (DO), et
h) les conduits correspondants (DL).

19. Dispositif suivant l'une des revendications 14 à 18, **caractérisé en ce que** le dispositif est assisté par ordinateur.
